# DEMANDE DE BREVET EUROPEEN

(11) **EP 0 555 122 A1**
(43) Date de publication de la demande: **11.08.1993**
(21) Numéro de dépôt: 93400175.1
(22) Date de dépôt: 26.01.1993
(51) Int. Cl.: B64C 13/28, B64C 25/24, F16D 11/00, F16D 25/061

(54) **Actionneur linéaire, notamment pour la manoeuvre d'une jambe d'atterrisseur d'avion**

(30) Priorité: 03.02.1992 FR 9201162
(71) Demandeur: MESSIER BUGATTI, F-78140 Velizy Villacoublay (FR)
(72) Inventeur: Derrien, Michel, F-78000 Versailles (FR)
(74) Mandataire: Jaunez, Xavier

(57) **Abrégé**

s7 L'invention concerne un actionneur linéaire comportant un corps principal et un système vis-écrou, avec une vis qui est bloquée axialement et qui est entraînée en rotation par un ensemble moto-réducteur grâce à un pignon coaxial, et un écrou qui est solidaire d'une tige-guide coulissant dans le corps principal.

Conformément à l'invention, la liaison en rotation entre la vis (102) et le pignon coaxial (107) est assurée par un moyen d'accouplement (140) qui est débrayable, par exemple constitué par une pluralité de doigts radiaux (110), et dont le débrayage est effectué en secours, pour débloquer la vis (102), grâce à un moyen d'actionnement associé, de préférence sous forme d'une cartouche de gaz (130), dont le déclenchement ne requiert qu'une très faible énergie.

## Description

L'invention concerne les actionneurs linéaires, en particulier les actionneurs électro-mécaniques à système vis-écrou.

Dans le domaine aéronautique, on utilise actuellement de tels actionneurs pour des commandes de vol, lesquels actionneurs peuvent présenter des avantages non négligeables par rapport aux actionneurs hydrauliques.

Dans le cadre d'une génération centralisée électrique, l'intérêt de tels actionneurs apparaît encore plus évident, en particuliersi l'on cherche à les utiliser pour la manoeuvre de jambes d'atterrisseurs.

L'élément entraînant du système vis-écrou peut être la vis ou l'écrou, mais on préfère souvent un système dans lequel la vis est l'élément entraînant et l'écrou l'élément entraîné, avec une vis bloquée axialement et liée en rotation à un pignon coaxial qui engrène avec le pignon de sortie de l'ensemble moto-réducteur, et avec un écrou qui est solidaire d'une tige-guide coulissant dans le corps principal. Une telle solution permet une bonne protection contre les chocs et pollutions extérieures (grâce à la tige-guide), une meilleure stabilité au flambage en position détendue (grâce au guidage de la tige-guide dans le corps principal), une meilleure capacité de graissage de la vis, ainsi qu'une installation facilitée des systèmes anti-rotation de la tige-guide et de ses butées de fin de course : de ce fait, dans le cas notamment de la manoeuvre d'une jambe d'atterriseur d'avion, cette solution apparaît mieux adaptée que la solution réciproque.

Cependant, ce type d'actionneur linéaire présente des inconvénients qui peuvent être graves si un défaut mécanique important survient (rupture de dents, grippage au niveau des dentures et/ou des roulements) : ceci est plus particulièrement le cas lorsque l'actionneur est associé à la manoeuvre d'une jambe d'atterrisseur d'avion, car un défaut de ce type peut bloquer la vis du système vis-écrou avant la descente ou en cours de la descente du train, et l'inertie de l'atterrisseur et les effets aérodynamiques exercés sur cet atterrisseur sont alors insuffisants pour débloquer l'actionneur.

Bien que la probabilité d'un tel défaut soit faible (on cherche toujours, dans le domaine aéronautique, à avoir un taux de panne qui reste inférieur à 10-⁹ par heure), les conséquences qui en découlent sont néanmoins très graves.

C'est précisément ce problème que l'invention vise à résoudre, bien que le domaine concerné ne soit pas strictement limité à celui des actionneurs de manoeuvre de jambes d'atterrisseurs.

L'invention a ainsi pour objet de réaliser un actionneur linéaire dont la structure permette de faire face à une situation de rupture de dents ou de grippage des dentures et/ou des paliers.

L'invention a aussi pour objet de réaliser un actionneur linéaire dont la structure soit à la fois légère et compacte, ce qui rend l'actionneur particulièrement intéressant pour la manoeuvre d'une jambe d'atterrisseur, en privilégiant alors avant tout la descente de l'atterrisseur (il importe peu en effet que le système nécessite des opérations de réarmement plus délicates au sol, après une utilisation en secours, car le but essentiel a été atteint si l'avion a pu atterrir normalement).

Il s'agit plus particulièrement d'un actionneur linéaire, notamment pour la manoeuvre d'une jambe d'atterrisseur d'avion, comportant un corps principal, avec une vis qui est bloquée axialement et qui est liée en rotation à un pignon coaxial engrènant avec le pignon de sortie d'un ensemble moto-réducteur d'entraînement, et un écrou qui est solidaire d'une tige-guide coulissant dans ledit corps principal, caractérisé par le fait que la liaison en rotation entre la vis et le pignon coaxial est assurée par un moyen d'accouplement qui est débrayable, et dont le débrayage est effectué en secours, pour débloquer la vis, grâce à un moyen d'actionnement associé dont le déclenchement ne requiert qu'une très faible énergie.

De préférence, le moyen d'accouplement est essentiellement constitué par au moins un doigt radial porté par une extension de la vis sur laquelle le pignon coaxial est monté tournant, ledit doigt radial étant en appui par son extrémité radialement intérieure contre une came associée et coopérant par son extrémité radialement extérieure avec une réservation associée du pignon coaxial, et ladite came étant déplaçable axialement entre une position accouplée et une position désaccouplée par suite du déclenchement du moyen d'actionnement. Avantageusement alors, le moyen d'accouplement comporte une pluralité de doigts radiaux répartis angulairement autour de l'axe de la vis, chacun de ces doigts radiaux étant rappelé par un ressort associé contre une came commune qui est de forme générale conique et agencée coaxialement à ladite vis.

On obtiendra en outre un fonctionnement plus précis en prévoyant que l'extrémité radialement intérieure du ou des doigts radiaux est une bille rapportée, et que la came commune comporte une extension cylindrique pouvant coulisser télescopiquement dans la vis.

Selon un mode d'exécution préféré, le moyen d'actionnement comporte une cartouche de gaz, ainsi qu'un piston coulissant dans un alésage borgne du corps principal et dont l'extrémité libre est accouplée à la came associée, de telle façon que le déclenchement dudit moyen d'actionnement provoque un déplacement axial dudit piston et de ladite came sous l'action du gaz libéré de ladite cartouche.

En particulier, la cartouche contient une poudre qui libère le gaz propulseur lorsqu'elle est enflammée par un moyen pyrotechnique, ou en variante est une réserve de gaz, dont le gaz propulseur est libéré par une vanne ou un robinet associé.

Il est par ailleurs intéressant que la vis soit en appui par un roulement à rotule contre le corps principal. Ceci permet de conférer une souplesse de débattement de la vis qui est très avantageuse.

Avantageusement alors, le roulement à rotule est agencé de telle manière que la réaction associée converge coniquement vers l'axe de la vis, en un point dudit axe qui est dans le plan radial de symétrie du pignon coaxial ou à tout le moins situé au voisinage dudit plan. On parvient alors à éviter la création d'efforts de frottement parasites grâce à la meilleure reprise des efforts tangentiels procurée par cet agencement du roulement à rotule.

D'autres caractéristiques et avantages de l'invention apparaîtront plus clairement à la lumière de la description qui va suivre et du dessin annexé, concernant un mode de réalisation particulier, en référence aux figures où :
- la figure 1 est une coupe axiale d'un actionneur linéaire conforme à l'invention (la vue n'illustre que la partie concernée de cet actionneur, c'est-à-dire l'extrémité associée à l'entraînement par le groupe moto-réducteur dont on n'a représenté que le dernier pignon ou pignon de sortie, l'autre extrémité de l'actionneur étant conforme à l'état de la technique);
- la figure 2 est une coupe selon II-II de la figure 1, permettant notamment de mieux distinguer l'agencement des doigts radiaux d'accouplement (ici trois doigts à 120 °).

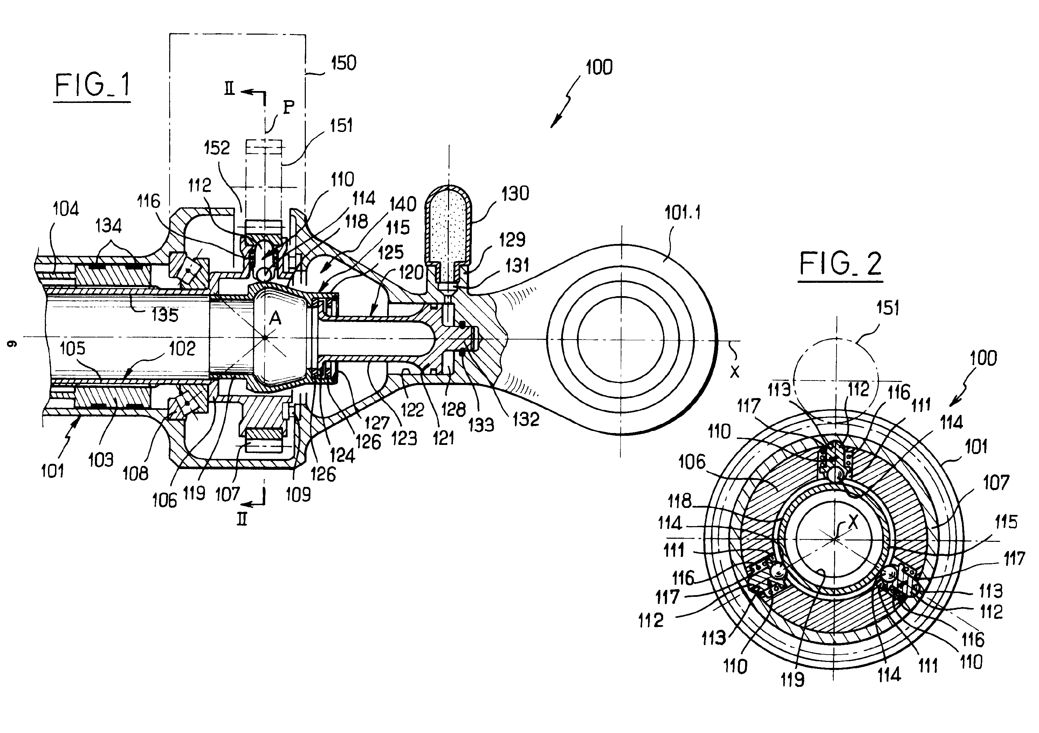

Les figures 1 et 2 illustrent un actionneur linéaire 100 conforme à l'invention, dont la structure est particulièrement bien adaptée pour une utilisation en vue de la manoeuvre d'une jambe d'atterrisseur d'avion. L'actionneur 100 comporte un corps principal 101 essentiellement cylindrique, dont on distingue une portion de liaison 101.1, qui, dans le cadre de l'utilisation précitée, sert au raccordement de l'actionneur à la structure de l'avion. Un système vis-écrou est logé dans le corps principal 101, avec une vis 102 qui est bloquée axialement et qui est entraînée en rotation autour de son axe X, et un écrou 103 qui est solidaire d'une tige-guide 104 coulissant dans le corps principal 101. L'autre extrémité, non représentée ici, de l'actionneur linéaire 100 comporte une portion de liaison analogue à la portion 101.1, pour la liaison à la jambe de train. Le corps principal 101 fait ainsi office de tube carter assurant le guidage et la protection de la tige-guide 104. L'écrou 103 et la tige-guide 104 qui lui est solidaire coulissent ainsi axialement, sans tourner, le long de l'axe X, lorsque la vis 102 est entraînée en rotation. Les moyens d'entraînement sont ici constitués par une ensemble moto-réducteur 150, comportant par exemple un moteur électrique et un réducteur à plusieurs étages de réduction, réducteur dont on n'a représenté que le dernier pignon ou pignon de sortie 151 qui engrène avec un pignon 107 coaxial à la vis 102. L'ensemble moto-réducteur 150 permet ainsi d'entraîner en rotation la vis 102 autour de l'axe X, et par suite de déplacer axialement l'écrou 103 qui est maintenu entre la partie centrale 105 de la vis 102, qui est filetée extérieurement, et l'alésage du corps principal 101, ledit écrou présentant ici des bagues de guidage et d'étanchéité 134.

Conformément à un aspect essentiel de l'invention, la liaison en rotation entre la vis 102 et le pignon coaxial 107 est assurée par un moyen d'accouplement 140 qui est débrayable, et dont le débrayage est effectué en secours, pour débloquer la vis 102, grâce à moyen d'actionnement associé 120, 130 dont le déclenchement ne requiert qu'une très faible énergie.

Grâce à une telle liaison débrayable, il est maintenant possible de débloquer la vis 102 si un défaut mécanique important survient (rupture de dent, grippage au niveau des dentures et/ou des roulements), ce qui confère une sécurité supplémentaire extrêmement avantageuse. Dans le cas où l'actionneur linéaire 100 est utilisé pour la manoeuvre d'une jambe d'atterrisseur d'avion, le déblocage de la vis qui peut être déclenché aisément en ultime secours par le pilote permet d'effectuer la descente du train grâce à l'inertie et aux efforts aérodynamiques associés, et par suite une atterrissage normal de l'avion.

Conformément au mode d'exécution illustré ici, le moyen d'accouplement 140 est essentiellement constitué par au moins un doigt radial 110, ici trois doigts radiaux disposés 120°, porté par une extension 106 de la vis 102 sur laquelle le pignon coaxial 107 est monté tournant. Ainsi, l'extension 106 comporte en l'espèce une pluralité de logements radiaux 111 servant chacun à recevoir un doigt radial d'accouplement 110 associé. Chaque doigt radial 110 est en appui par son extrémité radialement intérieure 114 contre une came associée 115, et coopère (en position accouplée)par son extrémité radialement extérieure 112 avec une réservation associée 113 du pignon coaxial 107. En l'espèce, chaque doigt radial 110 se présente sous la forme d'un pion dont l'extrémité radialement extérieure 112 passe par une ouverture radiale associée 117 de la partie périphérique formant palier de l'extension 106 . La surface intérieure de la couronne du pignon 107 présente ici trois réservations 113, disposées à 120°, et dont la forme en cuvette est homologue de celle de l'extrémité des doigts radiaux 110. Chacun des doigts 110 est rappelé par un ressort associé 116 contre la came 115, qui est ici une came commune à tous les doigts radiaux 110. Le fait de prévoir une came commune simplifie considérablement la structure de l'actionneur, et assure une parfaite synchronisation dans le mouvement des différents doigts radiaux. La came commune 115 est de forme générale conique, et est agencée coaxialement à la vis 102. Cette came commune est déplaçable axialement entre une position accouplée et une position désaccouplée par suite du déclenchement du moyen d'actionnement 120,130, ainsi que cela sera décrit plus loin plus en détail lors de la description des organes constituant ledit moyen d'actionnement.

En l'espèce, la came commune 115 comporte une partie principale 118 de forme sensiblement conique, qui est contactée par les extrémités radialement intérieures des doigts radiaux 110, lesquelles extrémités sont ici réalisées sous la forme d'une bille rapportée 114. La position illustrée ici correspond à une position accouplée, dans laquelle les doigts radiaux 110 assurent la liaison d'entraînement en rotation entre le pignon coaxial 107 et la vis 102. Dans cette situation, l'actionneur linéaire se comporte comme un actionneur conventionnel du point de vue de son fonctionnement. Le dernier pignon 151 de l'ensemble moto-réducteur 150 passe par une ouverture latérale associée 152 du corps principal 101, sans avoir besoin d'une quelconque modification par rapport au corps des actionneurs de type conventionnel. Cependant, si un défaut suffisamment grave pour bloquer la rotation de la vis 102 survient, il suffit pour le pilote de déclencher un mouvement axial, sur une faible course, de la came commune 115 (vers la gauche sur la figure 1) pour que chacun des doigts radiaux 110 se rétractent en synchronisme, et libère ipso facto la liaison d'accouplement entre la vis 102 et le pignon coaxial 107. La vis 102 est alors libre de tourner par rapport au pignon 107 et à tous les pignons amont faisant partie de l'ensemble réducteur.

Ainsi que cela est visible sur la figure 1, la came commune 115 comporte en outre une extension cylindrique 119, dont le diamètre extérieur correspond sensiblement à l'alésage 135 de la partie principale 105 de la vis 102, de façon que cette extension cylindrique puisse coulisser télescopiquement dans la vis 102. On obtient ainsi un bon guidage axial de la came commune 115, et par suite une bonne synchronisation dans la rétraction des doigts radiaux 110.

Conformément à un mode d'exécution particulièrement avantageux, le moyen d'actionnement, qui permet de débrayer la liaison en rotation entre la vis 102 et le pignon coaxial 107, comporte une cartouche de gaz 130, ainsi qu'un piston 120 qui est accouplé à la came commune 115, de telle façon que le déclenchement dudit moyen d'actionnement provoque un déplacement axial dudit piston et de ladite came sous l'action du gaz libéré de ladite cartouche. Le corps principal 101 comporte ainsi un appendice latéral 129 servant à visser la cartouche de gaz 130, et dont le passage central 131 permet de communiqueravec un alésage borgne 122 du corps principal, dans lequel coulisse la partie principale 121 du piston 120. Le gaz propulseur peut ainsi pénétrer très rapidement par le passage 131 pour arriver dans la chambre 128 qui est en arrière du piston 120, et provoquer le déplacement quasi-instantané dudit piston. Le piston 120 comporte en outre une extrémité arrière de guidage 132 qui est provisoirement maintenue par une bague associée 133, et une extension avant 123 se terminant par un élargissement 124 qui sert à l'accouplement avec la came commune 115, ou plus précisément avec une portion cylindrique d'extrémité 125 de ladite came, cette portion élargie étant ainsi maintenue axialement entre deux bagues associées 126, qui sont bloquées par un jonc 127. Ainsi, lorsque le gaz propulseur est libéré, le déplacement axial du piston 120 (vers la gauche sur la figure 1) déplace instantanément la came commune 115 dont l'extrémité cylindrique 119 vient alors coulisser télescopiquement dans la vis 102, ce qui provoque la rétraction simultanée de tous les doigts radiaux 110, et par suite le débrayage de la liaison d'entraînement en rotation entre ladite vis et le pignon coaxial 107.

On pourra utiliser, pour la cartouche de gaz 130, une cartouche contenant une poudre qui libère le gaz propulseur lorsqu'elle est enflammée par un moyen pyrotechnique. En variante, la cartouche 130 pourra être une réserve de gaz, dont le gaz propulseur est libéré par une vanne ou un robinet associé. Le déclenchement peut se faire par tout moyen adéquat, dès lors que ce déclenchement ne requiert qu'une très faible énergie : il s'agira de préférence d'un déclenchement de type pyrotechnique commandé par le pilote depuis la cabine de pilotage.

Par ailleurs ,ainsi que cela est mieux visible sur la figure 1, la vis 102 est en appui par un roulement à rotule 108 contre le corps principal 101, au niveau de l'extension 106 de ladite vis. Un tel roulement à rotule permet de conférer une souplesse de débattement de la vis 102. De préférence alors, le roulement à rotule 108 est agencé de telle manière que la réaction associée converge coniquement vers l'axe X de la vis 102 en un point A dudit axe (visible sur la figure 1) qui est dans le plan radial de symétrie P du pignon coaxial 107, ou à tout le moins situé au voisinage dudit plan. Un tel agencement permet d'éviter la création d'efforts de frottement parasites grâce à la meilleure reprise des efforts tangentiels procurée par la disposition prévue du roulement à rotule 108. De l'autre côté du pignon coaxial 107, c'est-à-dire en extrémité terminale de l'extension 106, on a prévu une butée axiale 109 de type conventionnel ,avec un jeu de fonctionnement de façon à ne pas interférer avec la liberté de débattement que procure le roulement à rotule 108.

On est ainsi parvenu à réaliser un actionneur linéaire dont la structure permet de faire face à une situation de rupture de dents ou de grippage des dentures et/ou des paliers, cette structure restant à la fois légère et compacte. En effet, le moyen d'accouplement agencé selon une pluralité de doigts radiaux est beaucoup plus léger et beaucoup moins encombrant qu'un système d'embrayage de type à crabots. Les embrayages connus du type à crabots permettraient sans doute une réarmement plus facile du système, mais ils induiraient un poids et un encombrement importants lors du fonctionnement normal de l'actionneur linéaire. En l'espèce, la structure de l'actionneur linéaire permet de privilégier avant tout la descente de l'atterrisseur, même si les opérations de réarmement sont plus délicates à effectuer : il est bien évidemment préférable de rendre possible un atterrissage de l'avion dans des conditions normales, quitte à devoir réviser après l'ensemble du système en procédant à des opérations de démontage et de remontage, et à un changement de la cartouche de gaz.

L'actionneur linéaire conforme à l'invention est ainsi particulièrement adapté pour la manoeuvre d'une jambe d'atterrisseur d'avion, en procurant une utilisation rapide et fiable pour une descente en secours.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Actionneur linéaire, notamment pour la manoeuvre d'une jambe d'atterrisseur d'avion, comportant un corps principal, avec une vis qui est bloquée axialement et qui est liée en rotation à un pignon coaxial engrènant avec le pignon de sortie d'un ensemble moto-réducteur d'entraînement, et un écrou qui est solidaire d'une tige-guide coulissant dans ledit corps principal, caractérisé par le fait que la liaison en rotation entre la vis (102) et le pignon coaxial (107) est assurée par un moyen d'accouplement (140) qui est débrayable, et dont le débrayage est effectué en secours, pour débloquer la vis (102), grâce à un moyen d'actionnement associé (120, 130) dont le déclenchement ne requiert qu'une très faible énergie.

2. Actionneur linéaire selon la revendication 1, caractérisé par le fait que le moyen d'accouplement (104) est essentiellement constitué par au moins un doigt radial (110) porté par une extension (106) de la vis (102) sur laquelle le pignon coaxial (107) est monté tournant, ledit doigt radial étant en appui par son extrémité radialement intérieure (114) contre une came associée (115) et coopérant par son extrémité radialement extérieure (112) avec une réservation associée (113) du pignon coaxial (107), et ladite came étant déplaçable axialement entre une position accouplée et une position désaccouplée par suite du déclenchement du moyen d'actionnement (120, 130).

3. Actionneur linéaire selon la revendication 2, caractérisé par le fait que le moyen d'accouplement (140) comporte une pluralité de doigts radiaux (110) répartis angulairement autour de l'axe de la vis (102), chacun de ces doigts radiaux étant rappelé par un ressort associé (116) contre une came commune (115) qui est de forme générale conique et agencée coaxialement à ladite vis.

4. Actionneur linéaire selon la revendication 2 ou 3, caractérisé par le fait que l'extrémité radialement intérieure du ou des doigts radiaux (110) est une bille rapportée (114).

5. Actionneur linéaire selon la revendication 3, caractérisé par le fait que la came commune (115) comporte une extension cylindrique (119) pouvant coulisser télescopiquement dans la vis (102).

6. Actionneur linéaire selon l'une des revendications 3 à 5, caractérisé par le fait que le moyen d'actionnement (120, 130) comporte une cartouche de gaz (130), ainsi qu'un piston (120) coulissant dans un alésage borgne (122) du corps principal (101) et dont l'extrémité libre (124) est accouplée à la came associée (115) de telle façon que le déclenchement dudit moyen d'actionnement provoque un déplacement axial dudit piston et de ladite came sous l'action du gaz libéré de ladite cartouche.

7. Actionneur linéaire selon la revendication 6, caractérisé par le fait que la cartouche (130) contient une poudre qui libère le gaz propulseur lorsqu'elle est enflammée par un moyen pyrotechnique.

8. Actionneur linéaire selon la revendication 6, caractérisé par le fait que la cartouche (130) est une réserve de gaz dont le gaz propulseur est libéré par une vanne ou un robinet associé.

9. Actionneur linéaire selon l'une des revendications 1 à 8, caractérisé par le fait que la vis (102) est en appui par un roulement à rotule (108) contre le corps principal (101).

10. Actionneur linéaire selon la revendication 9, caractérisé par le fait que le roulement à rotule (108) est agencé de telle manière que la réaction associée converge coniquement vers l'axe (X) de la vis (102), en un point (A) dudit axe qui est dans le plan radial de symétrie (P) du pignon coaxial (107) ou à tout le moins situé au voisinage dudit plan.
